(19) Europäisches Patentamt
European Patent Office
Office européen des brevets

(11) Publication number: 0 031 207 B1

(12) EUROPEAN PATENT SPECIFICATION

(45) Date of publication of patent specification: **10.10.84**

(51) Int. Cl.³: **C 08 G 18/80**, C 08 G 18/76, C 07 C 127/24

(21) Application number: **80304260.5**

(22) Date of filing: **27.11.80**

(54) **Process for preparing liquid polyisocyanate compositions, and their use.**

(30) Priority: **14.12.79 GB 7943097**

(43) Date of publication of application: **01.07.81 Bulletin 81/26**

(45) Publication of the grant of the patent: **10.10.84 Bulletin 84/41**

(84) Designated Contracting States: **BE DE FR GB IT NL**

(56) References cited:
**DE-A-2 513 793**
**DE-A-2 708 820**
**FR-A-2 241 597**
**GB-A- 994 890**
**GB-A-1 377 676**
**GB-A-1 514 445**

(73) Proprietor: **IMPERIAL CHEMICAL INDUSTRIES PLC**
**Imperial Chemical House Millbank**
**London SW1P 3JF (GB)**

(72) Inventor: **Hughes, Jeffrey**
**57 Normanby Road**
**Worsley Manchester (GB)**
Inventor: **Keane, Kevin Edward**
**88 Kirkway Alkrington**
**Middleton Manchester (GB)**

(74) Representative: **Ricks, Michael James et al**
**Imperial Chemical Industries PLC Legal Department: Patents PO Box 6**
**Welwyn Garden City Herts, AL7 1HD (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 031 207 B1

**Description**

This invention relates to liquid polyisocyanate compositions and in particular to compositions containing diphenylmethane diisocyanate and to the use of such compositions in the manufacture of polyurethanes.

It is well known to manufacture polyurethanes, of a cellular or non-cellular nature, by reacting an organic polyisocyanate with an organic polyol in the presence of additives of various kinds. Many organic polyisocyanates have been proposed for use in making polyurethanes but, since many polyurethane manufacturing processes involve the rapid mixing of materials at room temperature, it is preferred to use polyisocyanates that are liquid at room temperature and that remain in the liquid state without significant deposition of solid materials even when stored at relatively low temperatures such as may be encountered in winter.

One of the polyisocyanates which has been used commercially in the manufacture of polyurethanes is diphenylmethane diisocyanate which is generally available in various forms. For the manufacture of high grade polyurethane elastomers, the preferred form is substantially pure 4,4'-diphenylmethane diisocyanate which, for present purposes means diphenylmethane diisocyanate containing at least 97% by weight of the 4,4'-isomer, any impurity being largely the 2,4'-isomer with traces of the 2,2'-isomer.

Substantially pure 4,4'-diphenylmethane diisocyanate is not a liquid at room temperature, however, having a melting point at about 40°C. For use in polyurethane manufacture, therefore, it is necessary to melt this material and maintain it in a molten condition. In order to overcome this difficulty, various proposals have been made for converting substantially pure 4,4'-diphenylmethane diisocyanate to a liquid polyisocyanate composition which remains liquid when stored at a low temperature.

GB—A—1 514 445 (equivalent to DE—A1—2 708 820) discloses a thermoplastic polyurethane elastomer wherein the isocyanate reactant is the product of reaction of 4,4'-diphenylmethane diisocyanate and 0.0005—0.05 equivalents, per equivalent of isocyanate, of a $C_{1-18}$ aliphatic monohydric alcohol, including the monobutylether of diethylene glycol.

The present invention provides a method for the preparation of a liquid diphenylmethane diisocyanate composition which comprises reacting one molar proportion of diphenylmethane diisocyanate containing at least 97% by weight of the 4,4' isomer, any impurity being largely the 2,4' isomer with traces of the 2,2' isomer with 0.01 to 0.8 molar proportions of a monoalkoxy polyalkylene glycol of the formula:

$$RO—(CH_2\underset{\displaystyle R^1}{\underset{|}{C}}HO)_nH$$

wherein R represents an alkyl group containing from 1 to 12 carbon atoms, $R^1$ represents hydrogen or an alkyl group containing from 1 to 3 carbon atoms and n is an integer of from 2 to 58, the reaction being performed at a temperature of from 100 to 250°C and in the presence of a catalyst for the NCO/OH reaction whereby the urethane formed by the reaction of the monoalkoxy polyalkylene glycol with the diisocyanate reacts with further diisocyanate to form a major proportion of allophanate.

In the monoalkoxy polyalkylene glycol, R is preferably an alkyl group containing from 1 to 5 carbon atoms, for example methyl or ethyl. $R^1$ is preferably hydrogen or methyl, the material then being a monoalkoxy polyethylene or polypropylene glycol. The above formula includes copolymeric monoalkoxy polyalkylene glycols, for example copolymers derived from ethylene and propylene oxides. The integer n is preferably less than 44. Mixtures of monoalkoxy polyalkylene glycols may be used.

Under the conditions specified for the performance of the method of the invention, the urethane formed by the reaction of monoalkoxy polyalkylene glycol with the diphenylmethane diisocyanate reacts with further isocyanate to form an allophanate. It will be appreciated, however, that the reaction product may contain a minor proportion of material that has not reacted beyond the urethane stage as well as higher functionality material where the reaction has gone beyond the allophanate stage.

Particularly useful products are obtained when one molar proportion of the diphenylmethane diisocyanate is reacted with from 0.1 to 0.3 molar proportions of the monoalkoxy polyalkylene glycol.

The reaction between the diphenylmethane diisocyanate and the monoalkoxy polyalkylene glycol is preferably performed at a temperature in the range 100 to 200°C and is continued until a product of the desired constitution is obtained. The reaction catalyst may be any catalyst known for the reaction between isocyanate and hydroxyl groups. Particularly suitable catalysts are tin and dialkyl tin salts of carboxylic acids, for example stannous octoate and dibutyl tin dilaurate. Other suitable catalysts are tertiary amines in which the nitrogen atom is not directly attached to an aromatic residue, for example 1,4-diazabicyclo[2.2.2]octane. The monoalkoxypolyalkylene glycol is conveniently added slowly to the polyisocyanate and catalyst at the reaction temperature, but the reactants may alternatively be brought together at ambient temperature or at an intermediate temperature and then heated to the reaction temperature. After the reaction is complete, it is preferable to deactivate the catalyst either chemically,

for example by incorporating an acidic substance, or physically, for example by adsorption on to activated carbon. It is also possible in some cases to remove the catalyst by filtration or distillation.

The polyisocyanate compositions of the present invention are liquid compositions which are stable to storage, that is to say the compositions remains liquid at room temperature for long periods of time, sufficient in fact for all practical purposes, and can be transported or stored at low temperature without significant sedimentation of crystals of 4,4'-diphenylmethane diisocyanate. The compositions are suitable for use in the manufacture of polyurethanes using techniques fully described in the prior art. Being substantially difunctional, the compositions are particularly suitable for the manufacture of polyurethane elastomers and flexible foams including micro-cellular elastomers.

If desired, the choice of monoalkoxypolyalkylene glycol may be made with a view to tailoring the properties of the composition to suit a particular application. For example, in the formation of polyurethane foams from aqueous systems it may be desirable to increase the interaction between the aqueous phase and the isocyanate phase; this may be achieved by employing a hydrophilic monoalkoxypolyalkylene glycol such as a monoalkoxypolyethylene glycol. If less interaction between the phases is required, a more hydrophobic material such as a monoalkoxypolypropylene glycol may be more suitable.

In general we have found that the compositions of the present invention give superior polyurethane foam products, in terms of properties such as strength and ease of cure, when compared with 4,4'-diphenylmethane diisocyanate in which no reaction with a monoalkoxy polyalkylene glycol has taken place.

The invention is illustrated by the following Examples in which, all parts and percentages are by weight unless otherwise stated.

Example 1

To 250 parts of molten 4,4'-diphenylmethane diisocyanate was added 0.5 part of dibutyl tin dilaurate and the mixture was stirred under dry nitrogen. The temperature was raised with stirring to 120°C at which point 40 parts of mono methoxy polyethylene glycol of molecular weight 246 were added slowly over 15 minutes whilst maintaining the temperature at 120°C. The reaction mixture was stirred for another 2 hours at 120°C and then cooled to ambient temperature. The product was a light brown liquid having an isocyanate value of 23.6%. The isocyanate value of the 4,4'-diphenylmethane diisocyanate starting material is 33.6% indicating that approximately 20% of the original isocyanate groups had reacted.

Water blown flexible foam mouldings were prepared from the product and also from unmodified 4,4'-diphenylmethane diisocyanate using the conventional methods known in the art and the following formulation:

| | Parts by weight | |
|---|---|---|
| | Foam A | Foam B |
| Oxypropylated glycerol with 15% ethylene oxide tip 5,250 molecular weight | 100 | 100 |
| Water | 3.4 | 3.4 |
| DABCO 33LV (Trademark of Air Products & Chem.) | 0.4 | 0.4 |
| NIAX catalyst A1 (Trademark of Union Carbide) | 0.1 | 0.1 |
| Silicone B4113 (ex Union Carbide) | 0.1 | 0.1 |
| Refrigerant 11 | 2.0 | 2.0 |
| Isocyanate product prepared as described above | — | 64.2 |
| Pure 4,4'-diisocyanato diphenylmethane (molten) | 45.1 | — |

Foam A was a crumbly, cheesy mass, Foam B was a good quality, resilient foam and had the following physical properties:

| | |
|---|---|
| Overall density (kg/m$^3$) | 64 |
| Elongation % | 115 |
| Tensile Strength (kN/m$^2$) | 150 |

| | |
|---|---|
| Tear strength (N/m) | 605 |
| Compression 25% | 7.5 |
| Hardness 40% | 10.4 |
| ($kN/m^2$) 50% | 13.8 |
| 65% | 28.4 |

Example 2

To 860 parts of molten 4,4′-diphenylmethane diisocyanate were added 1.7 parts of dibutyl tin laurate and the mixture was stirred under dry nitrogen. The temperature was raised with stirring to 120°C at which point 140 parts of mono methoxypolypropylene glycol of molecular weight 406 were added slowly over 15 minutes whilst maintaining the temperature at 120°C. The reaction mixture was stirred for 1½ hours at 120°C and then cooled to ambient temperature. The product was a light brown liquid having an isocyanate value of 23.7% indicating that approximately 20% of the original isocyanate groups had reacted.

Example 3

To 788 parts of molten 4,4′-diphenylmethane diisocyanate were added 1.6 parts dibutyl tin laurate and the mixture stirred under dry nitrogen. The temperature was raised with stirring to 120°C at which point 212 parts of monoethoxy polyethylene glycol of molecular weight 1100 were added slowly over 15 minutes whilst maintaining the temperature at 120°C. The reaction mixture was stirred for 1½ hours at 120°C and then cooled to ambient temperature. The product was a light brown liquid having an isocyanate value of 21.3% indicating that approximately 20% of the original isocyanate groups had reacted.

Cup foam elastomers were prepared by mixing 42.4 parts of this product and 100 parts of the following resin blend:

| | |
|---|---|
| 85.9 parts | Polyol 1* |
| 8.6 parts | 1,4-butane diol |
| 0.4 parts | catalyst DABCO |
| 0.0007 parts | Tin catalyst Foamrez ULI |
| 0.18 parts | water |
| 5.5 parts | Arcton 11 |

*Polyol 1 is a mixture of 0.34 parts ethylene glycol, 29.86 parts oxyalkylated diethylene glycol of hydroxyl value 30.0 mg KOH/gm and 59.8 parts of oxyalkylated mixture of 60/40 glycerol/diethylene glycol of hydroxyl value 29 mg KOH/gm.

The elastomers obtained had high tensile and tear strengths, compared with pure 4,4′-diphenylmethane diisocyanate which gave a crumbly soft very poor elastomer.

Example 4

To 926 parts of 4,4′-diphenylmethane diisocyanate were added 1.9 parts of dibutyl tin dilaurate. The mixture was heated with stirring under dry nitrogen to 120°C and 74 parts of ethylene glycol monomethyl ether were added slowly. The mixture was heated at 120°C for a further 2 hours and allowed to cool. The product was a clear brown liquid with an isocyanate value of 23.0%.

Flexible foam mouldings were prepared from the products of Examples 1 and 4 using the conventional moulding methods known in the art and the following formulations.

| | Parts by weight Foam C | Foam D |
|---|---|---|
| Oxypropylated glycerol with 15% ethylene oxide tip, 5250 molecular weight | 100 | 100 |
| Water | 1.8 | 1.8 |
| Niax Catalyst A1 | 0.1 | 0.1 |
| Refrigerant 11 | 10 | 10 |
| Isocyanate from Example 1 | 47.8 | — |
| Isocyanate from Example 4 | — | 46.8 |

| | Parts by weight Foam E | Foam F |
|---|---|---|
| Oxypropylated glycerol with 15% ethylene oxide tip, 5250 molecular weight | 100 | 100 |
| Water | 2.6 | 2.6 |
| Dabco 33LV | 0.4 | 0.4 |
| Niax Catalyst A1 | 0.1 | 0.1 |
| Silicone B4113 | 0.1 | 0.1 |
| Oxyethylated octyl phenol | 1.0 | 1.0 |
| Refrigerant 11 | 2.0 | 2.0 |
| Isocyanate from Example 1 | 68.3 | — |
| Isocyanate from Example 4 | — | 67.3 |

Compression sets of each of the foams C, D, E, F were measured with the following results:

| | | Foam C | Foam D | Foam E | Foam F |
|---|---|---|---|---|---|
| Compression Set % | 50% compression | 9 | 17 | 10 | 31 |
| | 75% compression | 9 | 59 | 12 | 64 |
| | 90% compression | 11 | 86 | 14 | 84 |

The lower compression set values of Foams C and E relative to Foams D and F clearly demonstrate the advantage of using 4,4′-diphenylmethane diisocyanate modified with an alkyl ether of a polyalkylene glycol instead of an alkyl ether of a simple alkylene glycol.

**Claims**

1. A method for the preparation of a liquid diphenylmethane diisocyanate which comprises reacting one molar proportion of diphenylmethane diisocyanate containing at least 97% by weight of the 4,4′ isomer, any impurity being largely the 2,4′ isomer with traces of the 2,2′ isomer with from 0.01 to 0.8 molar proportions of a monoalkoxy polyalkylene glycol of the formula:

$$RO—(CH_2\underset{\displaystyle R^1}{\underset{|}{C}}HO)_nH$$

wherein R represents an alkyl group containing from 1 to 12 carbon atoms, $R^1$ represents hydrogen or an alkyl group containing from 1 to 3 carbon atoms and n is an integer of from 2 to 58, the reaction

being performed at a temperature of from 100 to 250°C and in the presence of a catalyst for the NCO/OH reaction whereby the urethane formed by the reaction of the monoalkoxy polyalkylene glycol with the diisocyanate reacts with further diisocyanate to form a major proportion of allophanate.

2. A method according to claim 1 wherein R is an alkyl group containing from 1 to 5 carbon atoms.

3. A method according to claim 1 or claim 2 wherein $R^1$ is hydrogen or methyl.

4. A method according to any one of the preceding claims wherein one molar proportion of the diphenylmethane diisocyanate is reacted with from 0.1 to 0.3 molar proportions of the monoalkoxy polyalkylene glycol.

5. The use in the manufacture of polyurethanes of a liquid diphenylmethane diisocyanate prepared according to any one of the preceding claims.

**Revendications**

1. Procédé de préparation d'une composition liquide de diisocyanatodiphénylméthane, qui comprend la réaction d'une proportion molaire de diisocyanatodiphénylméthane contenant au moins 97% en poids de l'isomère 4,4', l'impureté éventuelle étant principalement l'isomère 2,4' avec des traces de l'isomère 2,2', avec 0,01 à 0,8 proportion molaire d'un monoalcoxypolyalcoylèneglycol de formule:

$$RO—(CH_2\underset{\displaystyle R^1}{\underset{|}{C}}HO)_nH$$

où R représente un radical alcoyle comptant 1 à 12 atomes de carbone, $R^1$ représente un atome d'hydrogène ou radical alcoyle comptant 1 à 3 atomes de carbone et n représente un nombre entier de 2 à 58, la réaction étant effectuée à une température de 100 à 250°C et en présence d'un catalyseur pour la réaction NCO/OH de sorte que l'uréthanne formé par la réaction du monoalcoxypolycoylène-glycol avec le diisocyanate réagit avec une nouvelle quantité de diisocyanate pour former une proportion majeure d'allophanate.

2. Procédé suivant la revendication 1, dans lequel R représente un radical alcoyle comptant 1 à 5 atomes de carbone.

3. Procédé suivant la revendication 1 ou 2, dans lequel $R^1$ représente un atome d'hydrogène ou radical méthyle.

4. Procédé suivant l'une quelconque des revendications précédentes, dans lequel une proportion molaire du diisocyanatodiphénylméthane est mise à réagir avec 0,1 à 0,3 proportion molaire du monoalcoxypolyalcoylèneglycol.

5. Utilisation d'un diisocyanatodiphénylméthane liquide préparé suivant l'une quelconque des revendications précédentes dans la production de polyuréthannes.

**Patentansprüche**

1. Verfahren zur Herstellung eines flüssigen Diphenylmethandiisocyanats, bei welchem ein molarer Anteil Diphenylmethandiisocyanat, welches mindestens 97 Gew.-% des 4,4'-Isomers enthält, wobei jegliche Verunreinigung weitgehend aus dem 2,4'-Isomer mit Spuren des 2,2'-Isomers besteht, mit 0,01 bis 0,8 molaren Anteilen eines Monoalkoxypolyalkylenglycols der Formel:

$$RO—(CH_2\underset{\displaystyle R^1}{\underset{|}{C}}HO)_nH$$

umgesetzt wird, worin R für eine Alkylgruppe mit 1 bis 12 Kohlenstoffatomen steht, $R^1$ für Wasserstoff oder eine Alkylgruppe mit 1 bis 3 Kohlenstoffatomen steht und n für eine Ganzzahl von 2 bis 58 steht, wobei die Reaktion bei einer Temperatur von 100 bis 250°C und in Gegenwart eines Katalysators für die NCO/OH-Reaktion ausgeführt wird, wodurch das durch die Reaktion des Monoalkoxypolyalkylenglycols mit dem Diisocyanat gebildete Urethan mit weiterem Diisocyanat reagiert, so daß ein überwiegender Anteil Allophanat gebildet wird.

2. Verfahren nach Anspruch 1, bei welchem R für eine Alkylgruppe mit 1 bis 5 Kohlenstoffatomen steht.

3. Verfahren nach Anspruch 1 oder 2, bei welchem $R^1$ für Wasserstoff oder Methyl steht.

4. Verfahren nach einem der vorhergehenden Ansprüche, bei welchem ein molarer Anteil des Diphenylmethandiisocyanats mit 0,1 bis 0,3 molaren Anteilen des Monoalkoxypolyalkylenglycols umgesetzt wird.

5. Die Verwendung eines flüssigen Diphenylmethandiisocyanats, welches nach einem der vorhergehenden Ansprüche hergestellt worden ist, zur Herstellung von Polyurethanen.